Europäisches Patentamt

**European Patent Office**

Office européen des brevets

(19)

(11) Veröffentlichungsnummer: **0 215 182**
**B1**

(12) **EUROPÄISCHE PATENTSCHRIFT**

(45) Veröffentlichungstag der Patentschrift:
20.09.89

(51) Int. Cl.⁴: **B23C 5/26**

(21) Anmeldenummer: 86104687.8

(22) Anmeldetag: 05.04.86

(54) **Fräs- und/oder Bohrmaschine.**

(30) Priorität: 14.09.85 DE 3532842

(43) Veröffentlichungstag der Anmeldung:
25.03.87 Patentblatt 87/13

(45) Bekanntmachung des Hinweises auf die Patenterteilung:
20.09.89 Patentblatt 89/38

(84) Benannte Vertragsstaaten:
CH DE FR GB IT LI

(56) Entgegenhaltungen:
EP-A- 0 123 918
CH-A- 347 697
DE-A- 3 425 236
FR-A- 2 192 474
US-A- 3 269 271

(73) Patentinhaber: Schwäbische Hüttenwerke Gesellschaft
mit beschränkter Haftung,
Wilhelmstrasse 67 Postfach 3280,
D-7080 Aalen-Wasseralfingen(DE)

(72) Erfinder: Dassler, Arnold, Rembrandtstrasse 25,
D-7080 Aalen 1(DE)

(74) Vertreter: Lorenz, Werner, Dipl.-Ing., Fasanenstrasse 7,
D-7920 Heidenheim(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Fräs- und/oder Bohrmaschine zum Fräsen, Bohren und Drehen von Werkstücken, mit wenigstens einer in einem Spindelgehäuse drehbar gelagerten Arbeitsspindel, in der ein Werkzeug in einer Werkzeugaufnahme, die einen Aufnahmekonus zum Festklemmen in der Spindel aufweist, eingespannt ist, wobei im Inneren des Aufnahmekonuses über ein Übergangsteil ein Schneidwerkzeug angeordnet ist, mit einem auf einem Spindelträger verschiebbaren Schlitten, auf dem ein Fräskopf mit der Arbeitsspindel angeordnet ist, und mit einem feststehenden und drehbar ausgestalteten Arbeitstisch zur Aufnahme des zu bearbeitenden Werkstückes.

In der DE-A 3 425 236 ist eine Fräs- und Bohrmaschine beschrieben bei der eine Fassung vorgesehen ist, in deren Inneren sich eine drehbare Welle befindet. In Verbindung mit einem radial außerhalb der Spindel fest angeordneten Positionierelement kann ein Werkzeughalter genau positioniert werden, damit Bearbeitungsfehler mit dem sich drehenden Schneidwerkzeug vermieden werden. Der vorbekannte Halter ist jedoch lediglich für die Verwendung eines sich drehenden Schneidwerkzeuges vorgesehen, denn die drehbare Welle 18, in der der Drehstahl befestigt ist, ist drehfest mit der Arbeitsspindel verbunden.

Derartige Werkzeugmaschinen sind im allgemeinen auch mit einer Einrichtung zum automatischen Werkzeugwechsel versehen. Auf diese Weise lassen sich bei kurzen Rüstzeiten auf wirtschaftliche Weise auf dem Arbeitstisch befestigte Werkstücke bohren und fräsen. Bei einer entsprechenden Schwenkbarkeit und Drehbarkeit des Fräskopfes bzw. Spindelstockes kann das Werkstück auf mehreren Seiten mit Bohr- und Fräswerkzeugen bearbeitet werden.

Es ist auch bereits vorgeschlagen worden, den Arbeitstisch oder wenigstens einen Teil des Arbeitstisches drehbar auszubilden. Wird ein derartiger Arbeitstisch mit einer Drehspindel und einer Drehmaschinenantriebseinrichtung versehen, lassen sich auf einer Fräs- und Bohrmaschine zusätzlich auch noch Dreharbeiten durchführen.

Ein Problem dabei liegt jedoch darin, daß der Drehstahl unverdrehbar eingespannt sein muß, während Fräs- und Bohrwerkzeuge hingegen über eine Werkzeugaufnahme drehbar in der Arbeitsspindel der Werkzeugmaschine angeordnet sind. Grundsätzlich läßt sich auch die Werkzeugaufnahme bzw. die normale Arbeitsspindel der Fräs- und Bohrmaschine zum Einspannen eines Drehwerkzeuges verwenden, wobei die Arbeitsspindel dann während des Dreharbeiten arretiert werden muß. Aufgrund der während der Dreharbeiten auftretenden hohen Kräfte, Schwingungen und Momente kann es jedoch zu Beschädigungen in den Lagern für die Arbeitsspindel kommen. Dadurch, daß das Drehwerkzeug fest in der Arbeitsspindel eingespannt ist und die Arbeitsspindel steht, treten nämlich stehende Kräfte auf die Lager der Arbeitsspindel auf. Dies bedeutet eine Punktlast auf die Lager, was bei entsprechend hohen Kräften zu einer bleibenden Deformation und damit zu Lagerschäden führen kann. Spannt man den Drehstahl in die Werkzeugaufnahme der Arbeitsspindel ein, muß daher für eine entsprechend stabile Lagerung der Arbeitsspindel gesorgt werden, was wiederum einen erhöhten Bau- und damit auch Kostenaufwand bedeutet. Trotzdem leidet die Lebensdauer der Lager darunter.

Eine gesonderte Einspanneinrichtung in dem Fräskopf für einen Drehstahl bedeutet jedoch einen entsprechend höheren Aufwand. Weiterhin ergeben sich dadurch auch Probleme bezüglich der Zentrierung des Drehstahles gegenüber der Drehspindel auf dem Arbeitstisch.

Der vorliegenden Erfindung liegt daher die Aufgabe zugrunde eine Fräs- und/oder Bohrmaschine zu schaffen, die derart ausgestaltet ist, daß auch ein Drehstahlhalter mit einem Drehstahl in die Arbeitsspindel einsetzbar ist, wobei die Gefahr von Lagerschäden weitgehend vermieden werden soll.

Erfindungsgemäß wird diese Aufgabe dadurch gelöst, daß in dem Aufnahmekonus ein gegenüber dem Fräskopf feststehender Drehstahlhalter mit einem Drehstahl oder ein mit dem Drehstahlhalter verbundenes Übergangsteil derart angeordnet ist, daß der Drehstahlhalter, oder das Übergangsteil im Betrieb über ein Halteglied mit einem feststehenden Teil der Fräs- und/oder Bohrmaschine, wie z.B. Spindelgehäuse, Fräskopf verbunden ist, während der Aufnahmekonus demgegenüber rotiert, und daß im nicht geklemmten Zustand des Aufnahmekonuses der Drehstahlhalter oder das Übergangsglied zu dem Aufnahmekonus durch eine Arretiereinrichtung arretiert ist.

Durch die erfindungsgemäße drehbare Befestigung des Drehstahlhalters werden gegenüber dem Aufnahmekonus und damit auch gegenüber der Arbeitsspindel während des Bearbeitens des Werkstückes Punktlasten auf die Lager der Arbeitsspindel vermieden. Über das Halteglied ist der Drehstahlhalter und damit auch der Drehstahl zwar feststehend in dem Werkzeugkopf befestigt, aber gleichzeitig können der Aufnahmekonus und damit auch die Arbeitsspindel gegenüber dem Drehstahlhalter rotieren. Dies bedeutet, daß keine Punktlast auf die Lager auftreten muß. Vielmehr kann eine umlaufende Belastung auf die Lager der Arbeitsspindel entstehen. Hierzu ist es ausreichend, wenn die Arbeitsspindel langsam während des Drehvorganges rotiert.

Durch die erfindungsgemäße Ausgestaltung kann auf einfache Weise und problemlos die bekannte Arbeitsspindel auch für Dreharbeiten verwendet werden.

Es ist lediglich dafür zu sorgen, daß der Drehstahl vor und nach dem Bearbeiten des Werkstückes exakt in einer bestimmten Position in dem Aufnahmekonus arretiert ist, damit der Drehstahl zum Bearbeiten der Werkstücke stets die richtige Position einnimmt. Dies bedeutet, daß im eingespannten Zustand des Aufnahmekonuses in der Arbeitsspindel der Aufnahmekonus rotieren kann, während der Drehstahl durch das Halteglied festgehalten wird. Im nicht gespannten Zustand und bei einem Werkzeugwechsel ist der Drehstahlhalter hingegen in einer bestimmten vorgewählten Lage gegenüber dem Aufnahmekonus arretiert. Dadurch, daß das Halteglied im eingespannten Zustand des Aufnahmekonuses in der Arbeitsspindel und damit in dem Zustand, in dem sich Drehstahlhalter und Aufnahmekonus relativ zueinander drehen können, die Halte- bzw. Arretierungsfunktion des Drehstahlhalters durch seine Verbindung mit einem feststehenden Teil der Fräs- und/oder Bohrmaschine übernimmt, ist auch während der Dreharbeiten die exakte Lage des Drehstahles gesichert.

Eine vorteilhafte Ausführungsform für die Arretierungseinrichtung kann darin bestehen, daß sie ein Sperrglied aufweist, das zwischen dem Drehstahlhalter bzw. Übergangsteil und dem Aufnahmekonus angeordnet ist, wobei das Sperrglied beim Einspannen des Aufnahmekonuses in die Arbeitsspindel in eine Freigabestellung bringbar und das Halteglied mit dem feststehenden Teil der Fräs- und/oder Bohrmaschine verbindbar ist.

In einer vorteilhaften Ausführungsform kann hierbei vorgesehen sein, daß das Sperrglied einen Verdrehsicherungsstift aufweist, der in dem Drehstahlhalter bzw. dem Übergangsglied verschiebbar angeordnet ist und der mit seinem Endbereich oder seinen Endbereichen in eine Aussparung in dem Aufnahmekonus oder ein mit dem Aufnahmekonus verbundenes Teil ragt, wobei die Aussparung oder das Teil so ausgestaltet ist, daß der Verdrehsicherungsstift in Sperrstellung radial unverdrehbar und in Arbeitsstellung zusammen mit dem Drehstahlhalter bzw. dem Übergangsglied gegenüber dem Aufnahmekonus drehbar ist.

Durch den Verdrehsicherungsstift wird auf einfache Weise die Arretierung und die Freigabe bewerkstelligt.

Dabei kann vorgesehen sein, daß der Verdrehsicherungsstift mit einem Ende in einen Verdrehsicherungsring ragt, dessen Innendurchmesser im vorderen Bereich – bezogen auf den Drehstahl – größer ist als der Außendurchmesser des Verdrehsicherungsstiftes und der in seinem hinteren Bereich einen Schlitz oder eine Nut aufweist, deren Durchmesser und deren Breite an den Verdrehsicherungsstift angepaßt ist.

Befindet sich der Verdrehsicherungsstift in der vorderen Position, in die er durch den Einspannvorgang des Aufnahmekonuses in die Arbeitsspindel gebracht worden ist, so ist die freie Drehbarkeit zwischen dem Drehstahlhalter und dem Aufnahmekonus gegeben. Im ungespannten Zustand hingegen befindet sich der Verdrehsicherungsring im hinteren Bereich und ist damit in dem Schlitz des Verdrehsicherungsringes, der fest mit dem Aufnahmekonus verbunden ist, eingerastet.

Es ist lediglich dafür zu sorgen, daß die Verschiebung des Verdrehsicherungsstiftes synchron mit dem Einspannvorgang verläuft. Hierzu kann z.B. eine Verstelleinrichtung vorgesehen sein, die mit der Spanneinrichtung der Arbeitsspindel zum Spannen des Aufnahmekonuses zusammenarbeitet.

Dabei kann vorgesehen sein, daß die Verstelleinrichtung einen an diesem direkt oder indirekt angreifenden Steuerschieber aufweist, der von der Spanneinrichtung der Arbeitsspindel zum Spannen des Aufnahmekonuses betätigbar ist.

Der Verdrehsicherungsstift kann dabei in einem Führungsbolzen angeordnet sein, der auf einer Stirnseite durch eine Feder vorgespannt ist, während an der anderen Stirnseite der Steuerschieber anliegt, welcher ebenfalls durch eine Feder in Richtung auf den Führungsbolzen vorgespannt ist.

Erfindungsgemäß kann dabei vorgesehen sein, daß der Spannweg zum Spannen des Aufnahmekonuses durch die Spanneinrichtung der Arbeitsspindel größer ist als der Verschiebeweg des Verdrehsicherungsstiftes in dem Schlitz des Drehstahlhalters bzw. Übergangsgliedes.

Auf diese Weise ist sichergestellt, daß während des Lösevorganges des Aufnahmekonuses in der Arbeitsspindel die Verdrehsicherung zwischen dem Drehstahlhalter und dem Aufnahmekonus wieder in Kraft tritt, damit die exakte Lage des Drehstahles gewährleistet ist. In diesem Falle kommt es nämlich vor dem endgültigen Lösen bereits zu einer Arretierung des Verdrehsicherungsstiftes.

In vorteilhafter Weise kann dabei vorgesehen sein, daß die auf den Steuerschieber wirkende Feder in nicht gespannter Position des Aufnahmekonuses ungespannt ist, im eingespannten Zustand des Aufnahmekonuses hingegen eine größere Vorspannkraft aufweist, als die auf der anderen Seite des Führungsbolzens angreifende Feder.

Durch diese Ausgestaltung ist sichergestellt, daß während des Drehvorganges der Verdrehsicherungsstift in seiner Freigabeposition bleibt.

Damit der Steuerschieber durch die Spanneinrichtung für den Aufnahmekonus auf einfache Weise und synchron, bzw. gleichzeitig betätigt werden kann, kann die Spanneinrichtung hierzu mit einem Gewindering versehen sein, der eine Anschlag fläche für das hintere Ende des Steuerschiebers bildet.

Damit es zu keinen Problemen bei auftretenden Biegeschwingungen kommt, kann vorgesehen sein, daß zwischen dem Drehstahlhalter bzw. dem Übergangsglied und dem Aufnahmekonus neben Kugel- oder Kegelrollenlager noch ein Dämpfungslager angeordnet ist. Das Dämpfungslager wird man dabei im allgemeinen zwischen den Kugel- oder Kegelrollenlager anordnen. In einfacher Weise kann es eine Büchse mit Notlaufeigenschaften sein, die mit einem etwas größeren Spiel wie die Kugel- oder Kegerollenlager über dem Außenumfang des Drehstahlhalters angeordnet ist. Lediglich wenn Schwingungen auftreten, tritt damit das Dämpfungslager in Funktion.

Das Halteglied zur exakten Festlegung der Position des Drehstahlhalters für den Drehvorgang kann auf beliebige Weise ausgebildet und mit dem feststehenden Teil der Fräs- und/oder Bohrmaschine verbunden sein.

In einfacher Weise kann es in eine Nut, einen Schlitz oder dgl. in dem feststehenden Teil eingeschoben werden. Dabei kann das Halteglied Stifte, Bolzen oder dgl. aufweisen, die in die Schlitze, Nuten oder Bohrungen eingeschoben werden. Ebenso ist auch eine klauenartige Verbindung möglich.

Nachfolgend sind zwei Ausführungsbeispiele der Erfindung, aus denen weitere erfindungsgemäße Merkmale und Vorteile hervorgehen, anhand der Zeichnung prinzipmäßig beschrieben.

Es zeigt:

Figur 1: einen Längsschnitt durch die erfindungsgemäße Werkzeugaufnahme für die Arbeitsspindel einer Fräsmaschine mit zentraler Entriegelung;

Figur 2: eine Draufsicht auf den vorderen Bereich der Werkzeugaufnahme mit einem Halteglied;

Figur 3: einen halbseitigen Querschnitt (nach der Linie III-III der Figur 1 und eine halbseitige Ansicht von vorne mit dem Halteglied;

Figur 4: einen Längsschnitt durch die erfindungsgemäße Werkzeugaufnahme für die Arbeitsspindel einer Fräsmaschine mit seitlicher Entriegelung.

Die Fräs- und/oder Bohrmaschine, die mit der erfindungsgemäßen Werkzeugaufnahme versehen werden kann, ist von bekannter Bauart, weshalb sie nachfolgend nicht näher beschrieben wird.

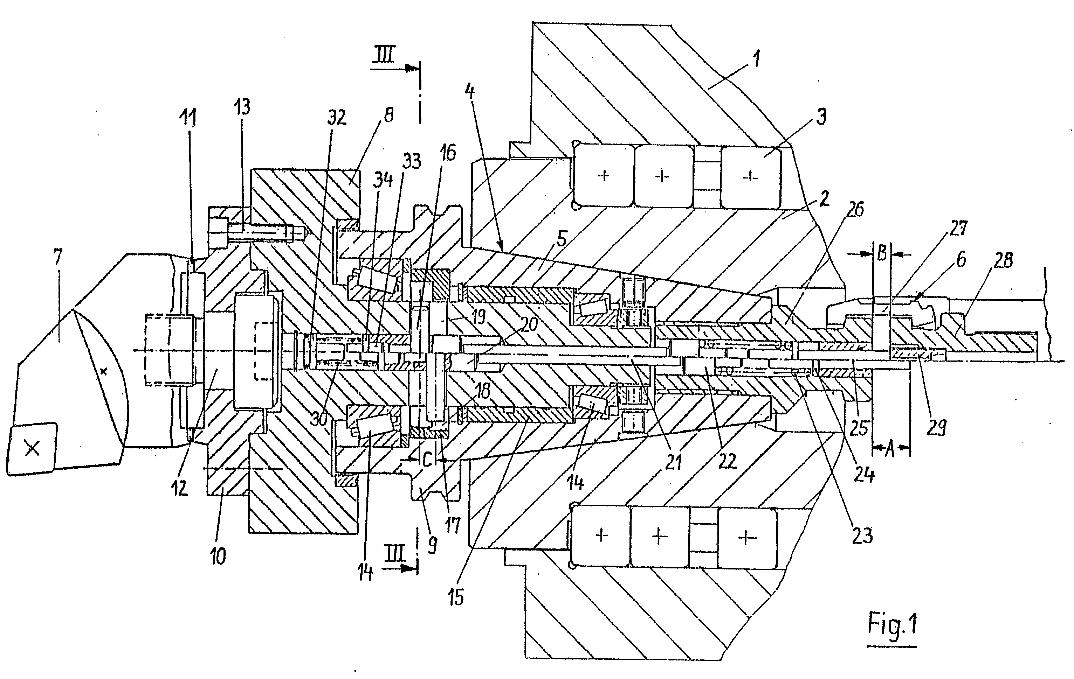

In üblicher Weise ist dabei einem Fräskopf der Werkzeugma schine, welcher schwenkbar und auf einem verschiebbaren Schlitten angeordnet ist, in einem Spindelgehäuse 1 eine Arbeitsspindel 2 über mehrere Lager 3 drehbar angeordnet. Das Spindelgehäuse 1 und die Arbeitsspindel 2 sind in der Figur 1 nur schematisch dargestellt. Die Arbeitsspindel 2 wird in üblicher Weise von einem ebenfalls nicht dargestellten Antriebsmotor aus angetrieben. Das vordere Ende der Arbeitsspindel 2 besitzt eine Öffnung in Konusform, in die eine Werkzeugaufnahme 4 einschiebbar ist. Die Werkzeugaufnahme 4 weist einen Aufnahmekonus 5 auf. In dem Aufnahmekonus 5 ist bei einem Fräs- oder Bohrvorgang das Fräs- bzw. Bohrwerkzeug befestigt. Zum Einspannen des Aufnahmekonuses 5 in der Bohrung der Arbeitsspindel 2 dient eine nicht näher dargestellte bekannte Spanneinrichtung 6.

Die erfindungsgemäße Werkzeugaufnahme 4 für einen Drehstahl 7 läßt sich in die gleiche Konusbohrung der Arbeitsspindel 2 einspannen, wobei lediglich dafür zu sorgen ist, daß der Aufnahmekonus 5 die entsprechenden Außenmaße besitzt.

Im Innenraum des Aufnahmekonuses 5 ist ein Drehstahlhalter 8 angeordnet, der auf der Vorderseite aus dem Aufnahmekonus herausragt. Ein Bund 9 ist dabei in üblicher Weise vorgesehen, damit eine Greifeinrichtung zum Werkzeugwechsel an dem Aufnahmekonus 5 angreifen kann.

Auf der Vorderseite des Drehstahlhalters 8 ist eine Scheibe 10 durch Befestigungsschrauben 13 mit einer Planverzahnung 11 befestigt. In üblicher Weise weist der Drehstahl 7 auf seiner Rückseite ebenfalls eine Planverzahnung auf, wobei über eine Schraube 12 eine exakte Verbindung mit dem Drehstahlhalter hergestellt wird. An Stelle einer Planverzahnung können auch andere Verbindungen gewählt werden, z.B. Bohrung mit Paßfeder o.ä..

Zwischen dem Drehstahlhalter 8 und dem Aufnahmekonus 5 sind Kegelrollenlager 14 und eine Büchse 15 aus Bronze als Dämpfungslager angeordnet. Auf diese Weise kann eine Drehbarkeit zwischen dem Drehstahlhalter 8 und dem Aufnahmekonus 5 hergestellt werden.

Je nach Stellung eines Verdrehsicherungsstiftes 16 (Ausführungsbeispiel nach der Figur 1) ist eine Arretierung oder eine freie Drehbarkeit zwischen dem Drehstahlhalter 8 und dem Aufnahmekonus 5 gegeben. In der Figur 1 ist im oberen Bereich die gespannte Stellung des Aufnahmekonuses 5 in der Arbeitsspindel 2 und damit die Freigabeposition dargestellt, während in der unteren Hälfte die nicht gespannte Position und damit die Arretierung zwischen dem Drehstahlhalter 8 und dem Aufnahmekonus 5 dargestellt ist. Der Verdrehsicherungsstift 16 ragt nur auf einer Seite aus der Umfangswand des Drehstahlhalters 8 heraus (in der Zeichnung unten).

Der Aufnahmekonus 5 besitzt nun im Inneren im Bereich des Verdrehsicherungsstiftes 16 einen Sicherungsring 17. Der Sicherungsring 17 weist in seinem vorderen Bereich einen freien Innendurchmesser auf, der geringfügig größer ist, als der Verdrehsicherungsstift 16 mit seinem aus der Umfangswand des Drehstahlhalters 8 herausragenden Teil. Auf diese Weise kann der Verdrehsicherungsstift 16 in dem Sicherungsring 17 in der vorderen Position frei umlaufen. Im hinteren Bereich besitzt der Sicherungsring 17 jedoch einen kleineren Durchmesser als die Umlaufbahn des Verdrehsicherungsstiftes 16, er weist jedoch unten, bezogen auf die Darstellung, einen Schlitz 18 auf, dessen Durchmesser und dessen Breite an den Verdrehsicherungsstift 16 angepaßt ist.

Der Drehstahlhalter 8 ist im Bereich des Verdrehsicherungsstiftes 16 mit einem Schlitz 19 versehen, damit der Verdrehsicherungsstift 16 in axialer Richtung verschoben werden kann. Befestigt und geführt ist der Verdrehsicherungsstift 16 in einem Führungsbolzen 20, der in einer zentralen Bohrung in dem Drehstahlhalter 8 axial verschiebbar ist. An dem Führungsbolzen 20 greift ein Steuerschieber 21 in Form einer einfachen Stange an. An dem von dem Führungsbolzen 20 abgewandten Ende des Steuerschiebers 21 liegt ein Bolzen 22 mit einem Bund an, der als Anlagefläche für eine Feder 23 dient. Das andere Ende der Feder 23 stützt sich an einem Bund 24 eines Spannbolzens 25 ab. Der Bolzen 22, die Feder 23 und der Spannbolzen 25 befinden sich in einer Bohrung eines fest mit dem Aufnahmekonus 5 verbundenen Anzugsteiles 26. An dem Anzugsteil 26 greift in bekannter Weise die Spanneinrichtung 6 der Arbeitsspindel 2 mit einer Spannzange 27 an, die mit einer Spannschraube 28 für die Spannzange zusammenarbeitet. Die Spannschraube 28 ist im vorderen Bereich mit einem inneren Gewindering 29 versehen, dessen Vorderseite als Anlagefläche für den Spannbolzen 25 dient. Auf der von dem Steuerschieber 21 abgewandten Seite des Führungsbolzens 20 ist ebenfalls eine Feder 30 angeordnet, die zur besseren Führung zwischen Führungsbolzen 32 und 33 gespannt ist. Der Führungsbolzen 33 liegt dabei mit einem Bund 34 an der Stirnseite des Führungsbolzens an.

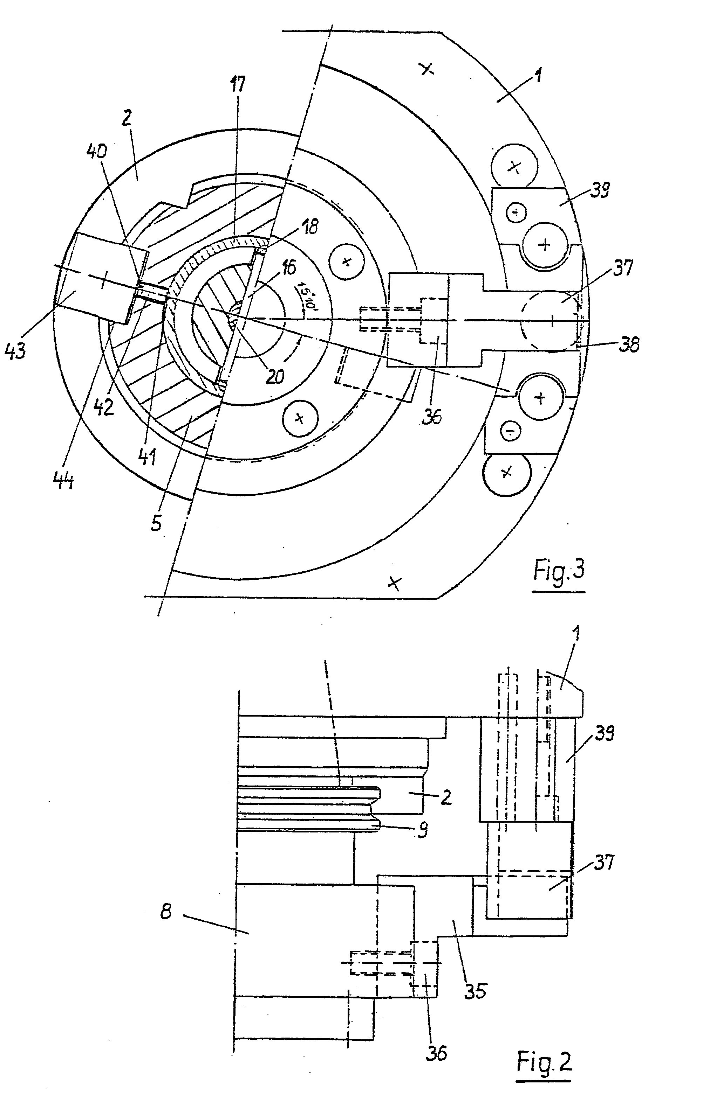

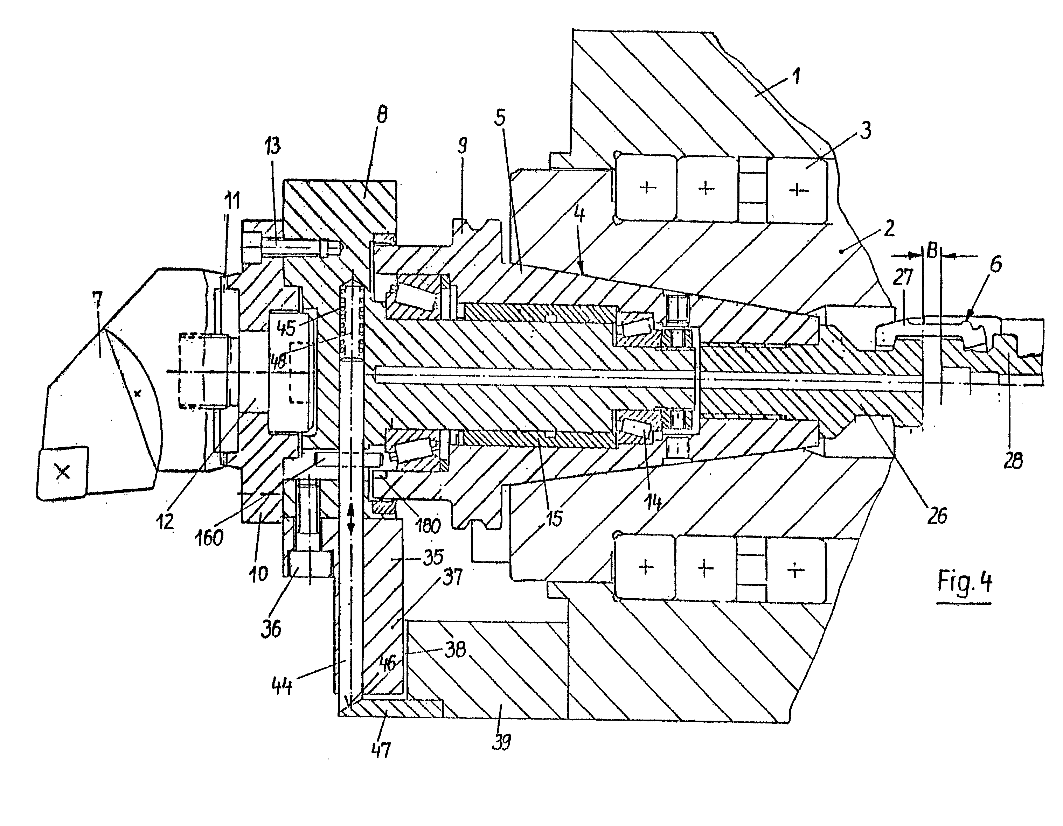

Aus den Figuren 2 und 3 ist ersichtlich, daß der Drehstahlhalter 8 mit einem Halteglied 35 versehen ist, das über eine oder mehrere Schrauben 36 mit diesem verbunden ist. Das Halteglied 35 weist einen Zapfen oder eine Verlängerung 37 auf, der in einen Schlitz 38 eines Aufsatzes 39 einschiebbar ist. Der Aufsatz 39 ist an dem Spindelgehäuse 1 befestigt.

Zur lagerichtigen Positionierung des Drehstahles 7 ist es lediglich erforderlich den Sicherungsring 17 in Umfangsrichtung einmalig exakt zu dem Aufnahmekonus, der ebenfalls regelmäßig in einer exakten Position in die Konusbohrung der Arbeitsspindel 2 eingebracht wird, einzustellen. Hierzu dient eine Bohrung 40. Ist die exakte Lage festgestellt, wird der Sicherungsring 17 entsprechend mit einer Ansenkung 41 versehen. Anschließend wird eine Madenschraube 42 in die als Gewindebohrung ausgeführte Bohrung 40 eingeschraubt, wodurch eine exakte Justierung des Verdrehsicherungsringes 17 hergestellt ist.

In bekannter Weise ist die Arbeitsspindel 2 mit einem Mitnehmerstein 43 versehen. Der Mitnehmerstein 43 greift in eine Mitnehmernut 44 des Aufnahmekonuses 5 ein. Auf diese Weise ist auch die notwendige exakte Positionierung des Aufnahmekonuses 5 gegenüber der Arbeitsspindel 2 hergestellt.

Die erfindungsgemäße Werkzeugaufnahme 4 für einen Drehstahl 7 nach der Figur 1 funktioniert nun auf folgende Weise:

In nichtgespanntem Zustand der Werkzeugaufnahme 4 und beim Werkzeugwechsel befindet sich der Verdrehsicherungsstift 16 in der hinteren Position (s. untere Darstellung in der Figur 1). Damit liegt der Verdrehsicherungsstift 16 in dem Schlitz 18 des Sicherungsringes 17 sicher arretiert. Die Feder 30 schiebt den Führungsbolzen 20 nach rechts und damit auch den Steuerschieber 21 und den Spannbolzen 25. Der Spannbolzen 25 ragt dabei mit seinem hinteren Ende um das Maß A nach hinten über das Anzugsteil 6 hervor. Die Feder 23 ist dabei so ausgelegt, daß sie in dieser Position ungespannt ist. Dies bedeutet, Drehstahlhalter 8 und Aufnahmekonus 5 sind über den Sicherungsring 17 zueinander arretiert.

Wird nun die Werkzeugaufnahme 4 mit dem Aufnahmekonus 5 in die Konusbohrung der Arbeitsspindel 2 eingeschoben, kommt das hintere Ende des Spannbolzens 25 mit dem Gewindering 29 in Kontakt. Während des Spannvorganges wird das Anzugsteil 6 nach hinten in die Konusbohrung der Arbeitsspindel 2 hineingezogen. Gleichzeitig werden dabei durch den Gewindering 29 der Spannbolzen 25 und damit auch der Steuerschieber 21 nach links verschoben, wodurch der Verdrehsicherungsstift 16 ebenfalls nach links geschoben wird und damit in den Bereich des Sicherungsringes 17 mit dem größeren Durchmesser gelangt. Dies bedeutet, daß damit eine realtive Verdrehung zwischen dem Drehstahlhalter 8 und dem Aufnahmekonus 5 möglich ist. Gleichzeitig wird die Feder 23 gespannt. Dadurch, daß diese eine größere Vorspannkraft erzeugt wie die Feder 30, ist sichergestellt, daß der Verdrehsicherungsstift 16 in seiner Freigabeposition verbleibt.

Während des Einschub- bzw. Spannvorganges des Aufnahmekonuses 5 wird gleichzeitig auch des Halteglied 35 mit seinem Zapfen 37 in den Schlitz 38 des Aufsatzes 39 eingeschoben. Damit wird die exakte Positionierung des Drehstahles 7 nun über diese Einrichtung erreicht. Es ist lediglich dafür zu sorgen, daß der Zapfen 37 schon in dem Schlitz 38 einrastet, bevor der Verdrehsicherungsstift 16 in seine Freigabeposition gelangt ist, damit die exakte Lage des Drehstahles 7 erhalten bleibt.

Bedeutend für die Funktionsweise der erfindungsgemäßen Werkzeugaufnahme 4 sind auch die unterschiedlichen Wege des Verdrehsicherungsstiftes 16 des Spannbolzens 25 und des Spannweges der Spanneinrichtung. Die in der oberen Hälfte der Figur 1 dargestellte Position zeigt die Lage in gespanntem Zustand, wenn die Spannschraube 28 noch offen ist. Stößt während des Spannvorganges die Spannschraube 28 mit dem Gewindering 29 auf den Spannbolzen 25, so wird dieser bis zum Anschlag eingeschoben. Damit wird der Verdrehsicherungsstift 16 nach links in seine Freigabeposition gebracht. Da der Verschiebeweg C des Verdrehsicherungsstiftes 16 deutlich kleiner ist als der Weg A den der Spannbolzen 25 und damit auch der Steuerschieber 21 zurücklegen, wird während des Spannvorganges die Feder 23 zusammengepreßt. Anschließend wird die Spannzange 27 nach unten in die Spannstellung gebracht und zieht den Aufnahmekonus 5 nach hinten. Dabei wird wieder ein Abstand B zwischen dem Anzugsteil 6 und der Spannschraube 28 hergestellt, womit auch der Spannbolzen 25 um diese Länge wieder aus der eingeschobenen Position geschoben wird. Der Verdrehsicherungsstift 16 bleibt jedoch in seiner vorderen Freigabeposition, weil die Feder 23 härter ist als die Feder 30.

Zum Lösen wird die Spannschraube 28 wieder vorgerückt und die Spannzange 27 abgehoben, wobei der Spannbolzen 25 wieder aufgrund der Anlage der Spannschraube 28 an der Anlagefläche des Anzugsteiles 6 vollständig eingeschoben wird. Drückt die Spannschraube 28 noch um einen kurzen Weg nach links nach, kommt der Aufnahmekonus 5 aus der Konusbohrung frei. Anschließend kann mit einem Greifer, welcher an dem Bund 8 angreift, das Werkzeug nach vorne herausgezogen werden. Der Weg B ist geringfügig größer als der Verschiebeweg C des Verdrehsicherungsstiftes 16. Während des Lösevorganges gelangt nach dem Verschiebeweg C der Verdrehsicherungsstift 16 wieder in dem Bereich des Schlitzes 18 und rastet dort ein. Erst anschließend wird das Werkzeug über das Halteglied 35 aus dem Schlitz 38 gezogen.

In der Figur 4 ist im Längsschnitt ein Ausführungsbeispiel mit einer seitlichen Entriegelung dargestellt. Die wesentliche Teile sind jedoch mit dem in der Figur 1 dargestellten Ausführungsbeispiel identisch, weshalb auch die entsprechenden Bezugszeichen beibehalten worden sind. Statt einer zentralen Entriegelung bzw. Verriegelung über den Verdrehsicherungsstift 16, den Sicherungsring 17 und den Steuerschieber 21 erfolgt die Entriegelung bzw. Verriegelung des Drehstahlhalters 8 auf einfache Weise nunmehr von der Seite aus.

Hierzu ist das Halteglied 35 mit einer Querbohrung 48 versehen, in der ein Querstift 44 verschiebbar angeordnet ist. Der Querstift 44 steht unter der Vorspannung einer Druckfeder 45. In eine Bohrung des Querstiftes 44 ist ein Verdrehsicherungsstift 160 eingesetzt, welcher sich mit seiner Längsachse koaxial zur Längsachse des Aufnahmekonuses 5 erstreckt. Der Verdrehsicherungsstift 160 ragt mit einem Ende (dem hinteren Ende) etwas nach innen in den freien Innenraum des Aufnahmekonuses 5. Im Bereich der vorderen Stirnseite des Aufnahmekonuses 5 ist ein Schlitz, bzw. eine Nut 180 (in der Darstellung auf der Unterseite) eingearbeitet. Die Länge und die Breite des Schlitzes bzw. der Nut 180 entsprechen der Länge des vorstehenden Teiles des Verdrehsicherungsstiftes 160 und seines Durchmessers.

Der Querstift 44 ragt an seinem freien Ende um ein geringes Maß aus dem Halteglied 35 heraus und weist auf seiner Stirnseite 46 eine Schrägfläche auf. Der Aufsatz 39 ist im vorderen Bereich mit einem Anschlagteil 47 versehen, dessen vorderes Ende ebenfalls eine Schrägfläche aufweist, welche an die Schrägfläche des Querstiftes 44 angepaßt ist.

Diese erfindungsgemäße Ausführungsform funktioniert nun auf folgende Weise:

Wenn sich die Werkzeugaufnahme mit dem Aufnahmekonus 5 außer halb der Arbeitsspindel befindet, liegt der Verdrehsicherungsstift 160 in deren Nut 180, weil die Druckfeder 45 den Querstift 44 nach unten, d.h. radial (bezogen auf die Längsachse des Aufnahmekonuses 5 nach außen) in die Nut 180 drückt. Auf diese Weise ist eine sichere Arretierung des Drehstahles 7 gegeben. Wird nun die Werkzeugaufnahme in die Arbeitsspindel 2 eingeschoben, so trifft der Querstift 44 mit seiner Schrägfläche auf das Anschlagteil 47 und wird damit gegen die Kraft der Feder 45 nach oben, d.h. radial nach innen geschoben. Dadurch kommt der Verdrehsicherungsstift 160 aus der Nut 180 frei. Gleichzeitig bzw. zur sicheren Einhaltung der Arretierung bereits kurz vorher übernimmt nunmehr die Verlängerung 37 des Haltegliedes 35 die Arretierung des Drehstahles 7, denn die Verlängerung 37 wird - ebenso wie in der Beschreibung zu der Figur 1 erläutert - in den Schlitz 38 des Aufsatzes 39 eingeschoben. Der Aufnahmekonus 5 kann dann während der Bearbeitung des Werkzeuges mit dem Drehstahl 7 frei rotieren, denn der Verdrehsicherungsstift 160 befindet sich in dem freien Innenraum des Aufnahmekonuses 5, wie in der Figur 4 dargestellt.

Selbstverständlich können der Querstift 44 und der Verdrehsicherungsstift 160 statt aus zwei getrennten Teilen auch einstückig ausgebildet sein. Maßgebend ist lediglich, daß aus dem Querstift 44 eine seitliche Erweiterung ragt, die in die Nut 180 eingepaßt werden kann.

## Patentansprüche

1) Fräs- und/oder Bohrmaschine zum Fräsen, Bohren und Drehen von Werkstücken, mit wenigstens einer in einem Spindelgehäuse drehbar gelagerten Arbeitsspindel, in der ein Werkzeug in einer Werkzeugaufnahme, die einen Aufnahmekonus zum Festklemmen in der Spindel aufweist, eingespannt ist, wobei im Inneren des Aufnahmekonuses über ein Übergangteil ein Schneidwerkzeug angeordnet ist, mit einem auf einem Spindelträger verschiebbaren Schlitten, auf dem ein Fräskopf mit der Arbeitsspindel angeordnet ist, und mit einem feststehenden und drehbar ausgestalteten Arbeitstisch zur Aufnahme des zu bearbeitenden Werkstückes, dadurch gekennzeichnet, daß in dem Aufnahmekonus (5) ein gegenüber dem Fräskopf feststehender Drehstahlhalter (8) mit einem Drehstahl (7) oder ein mit dem Drehstahlhalter verbundenes Übergangsteil derart angeordnet ist, daß der Drehstahlhalter (8), oder das übergangsteil im Betrieb über ein Halteglied (35) mit einem feststehenden Teil der Fräs- und/oder Bohrmaschine, wie z.B. Spindelgehäuse, Fräskopf (1) verbunden ist, während der Aufnahmekonus (5) demgegenüber rotiert, und daß im nicht geklemmten Zustand des Aufnahmekonuses (5) der Drehstahlhalter (8) oder das Übergangsglied zu dem Aufnahmekonus (5) durch eine Arretiereinrichtung (16, 17, 18 bzw. 44, 160, 180) arretiert ist.

2) Fräs- und/oder Bohrmaschine nach Anspruch 1, dadurch gekennzeichnet, daß die Arretiereinrichtung ein Sperrglied (16 bzw. 160) aufweist, das zwischen dem Drehstahlhalter (8) bzw. Übergangsteil und dem Aufnahmekonus (5) angeordnet ist, wobei das Sperrglied beim Einspannen des Aufnahmekonuses in die Arbeitsspindel (2) in eine Freigabestellung bringbar und das Halteglied (35) mit dem feststehenden Teil (1) der Fräs- und/oder Bohrmaschine verbindbar ist.

3) Fräs- und/oder Bohrmaschine nach Anspruch 2, dadurch gekennzeichnet, daß das Sperrglied einen Verdrehsicherungsstift (16 bzw. 160) aufweist, der in dem Drehstahlhalter (8) bzw. dem Übergangsglied verschiebbar angeordnet ist und der mit seinem Endbereich oder seinen Endbereichen in eine Aussparung (180) in dem Aufnahmekonus oder ein mit dem Aufnahmekonus verbundenes Teil (17) ragt, wobei die Aussparung oder das Teil (17) so ausgestaltet ist, daß der Verdrehsicherungsstift (16 bzw. 160) in Sperrstellung radial unverdrehbar und in Arbeitsstellung zusammen mit dem Drehstahlhalter (8) bzw. dem Übergangsglied gegenüber dem Aufnahmekonus (5) drehbar ist.

4) Fräs- und/oder Bohrmaschine nach Anspruch 3, dadurch gekennzeichnet, daß der Verdrehsicherungsstift (16) mit einem Ende in einen Verdrehsicherungsring (17) ragt, dessen Innendurchmesser im vorderen Bereich - bezogen auf den Drehstahl - größer ist als der Außendurchmesser des Verdrehsicherungsstiftes und der in seinem hinteren Bereich einen Schlitz (18) aufweist, dessen Durchmesser und dessen Breite an den Verdrehsicherungsstift (16) angepaßt ist.

5) Fräs- und/oder Bohrmaschine nach einem der Ansprüche 2-4, dadurch gekennzeichnet, daß das Sperrglied bzw. der Verdrehsicherungsstift (16) mit einer Verstelleinrichtung (21) zu dessen axialer Verschiebung in einen Schlitz (19) des Drehstahlhalters (8) bzw. des Übergangsgliedes versehen ist.

6) Fräs- und/oder Bohrmaschine nach Anspruch 5, dadurch gekennzeichnet, daß die Verstelleinrichtung einen an diesem direkt oder indirekt angreifenden Steuerschieber (21) aufweist, der von der Spann einrichtung (28) der Arbeitsspindel zum Spannen des Aufnahmekonuses (5) betätigbar ist.

7) Fräs- und/oder Bohrmaschine nach Anspruch 6, dadurch gekennzeichnet, daß der Verdrehsicherungsstift (16) in einem Führungsbolzen (20) angeordnet ist, der auf einer Stirnseite durch eine Feder (30) vorgespannt ist, während an der anderen Stirnseite der Steuerschieber (21) anliegt, welcher ebenfalls durch eine Feder (23) in Richtung auf den Führungsbolzen (20) vorgespannt ist.

8) Fräs- und/oder Bohrmaschine nach Anspruch 7, dadurch gekennzeichnet, daß der Spannweg (A bzw. B) zum Spannen des Aufnahmekonuses (5) durch die Spanneinrichtung (28) größer ist als der Verschiebeweg (C) des Verdrehsicherungsstiftes (16) in dem Schlitz (19) des Drehstahlhalters (8) bzw. Übergangsgliedes.

9) Fräs- und/oder Bohrmaschine nach Anspruch 8, dadurch gekennzeichnet, daß die auf den Steuerschieber (21) wirkende Feder (23) in nicht gespannter Position des Aufnahmekonuses (5) ungespannt ist, im eingespannten Zustand des Aufnahmekonuses (5) hingegen eine größere Vorspannkraft aufweist, als die auf der anderen Seite des Führungsbolzens (20) angreifende Feder (30).

10) Fräs- und/oder Bohrmaschine nach einem der Ansprüche 6 - 9, dadurch gekennzeichnet, daß die Spanneinrichtung (28) für den Aufnahmekonus (5) mit einem Gewindering (29) versehen ist, an der das hintere Ende des Steuerschiebers oder ein damit verbundenes Teil (25) anliegt.

11) Fräs- und/oder Bohrmaschine nach einem der Ansprüche 1 - 3, dadurch gekennzeichnet, daß sich der Verdrehsicherungsstift (160) mit seiner Längsachse wenigstens annähernd koaxial zur Längsachse des Aufnahmekonus (5) erstreckt und in eine im vorderen Bereich des Aufnahmekonuses (5) angeordnete Nut (180) zur Arretierung einpassbar ist und daß der Verdrehsicherungsstift (160) durch eine Arretiereinrichtung (44) für die Arbeitsposition bzw. für die Einspannposition in der Arbeitsspindel (2) aus der Nut (180) schiebbar ist.

12) Fräs- und/oder Bohrmaschine nach Anspruch 11, dadurch gekennzeichnet, daß die Arretierungseinrichtung einen Querstift (44) aufweist, der in einer Bohrung (48) in dem Halteglied (35) radial verschiebbar ist, wobei der Verdrehsicherungsstift (160) an dem Querstift angeordnet ist und das freie Ende des Querstiftes über eine Schrägfläche mit dem feststehenden Teil (39) zusammenarbeitet.

13) Fräs- und/oder Bohrmaschine nach einem der Ansprüche 1 - 12, dadurch gekennzeichnet, daß zwischen dem Drehstahlhalter (8) bzw. Übergangsglied und dem Aufnahmekonus Kegelrollenlager (14) und ein Dämpfungslager (15) angeordnet sind.

14) Fräs- und/oder Bohrmaschine nach einem der Ansprüche 1 - 13, dadurch gekennzeichnet, daß das Halteglied (35) in eine Nut, einen Schlitz, eine Bohrung (38) oder dgl. in einem mit dem Spindelgehäuse verbundenen feststehenden Teil (1) einschiebbar ist.

## Revendications

1. Fraiseuse-aléseuse pour fraiser, percer et tourner des pièces, comportant au moins un arbre de travail monté rotatif dans un corps de support et dans lequel un outil est monté dans un porte-outil qui comporte un cône de montage pour être bloqué à l'intérieur de l'arbre, un outil de coupe monté à l'intérieur du cône de montage au moyen d'un élément intermédiaire, un chariot agencé pour coulisser sur un support d'arbre, et sur lequel est disposée une tête de fraisage avec l'arbre de travail, et une table de travail stationnaire agencée pour pivoter et pour porter la pièce à usiner, caractérisée en ce qu'un porte-outil (8), stationnaire par rapport à la tête de fraisage et équipé d'un outil (7), ou un élément intermédiaire fixé au porte-outil, est monté dans le cône de montage (5) de telle manière que le porte-outil (8) ou l'élément intermédiaire, durant le fonctionnement, est raccordé par un élément de retenue (35) à une partie stationnaire de la fraiseuse-aléseuse, telle que par exemple le corps de support ou la tête de fraisage (1), tandis que le cône de montage (5) tourne par rapport à lui, et en ce que, dans l'état non bloqué du cône de montage (5), le porte-outil (8) ou l'élément intermédiaire est arrêté par rapport au cône de montage (5) au moyen d'un dispositif d'arrêt (16, 17, 18; 44, 160, 180).

2. Fraiseuse-aléseuse selon la revendication 1, caractérisée en ce que le dispositif d'arrêt comporte un élément de verrouillage (16, 160) disposé entre le porte-outil (8) ou l'élément intermédiaire et le cône de montage (5), cet élément de verrouillage étant mis dans une position de déverrouillage quand le cône de montage est bloqué dans l'arbre (2), et l'élément de retenue (35) étant raccordé à la partie stationnaire (1) de la fraiseuse-aléseuse.

3. Fraiseuse-aléseuse selon la revendication 2, caractérisée en ce que l'élément de verrouillage comporte une tige de verrouillage de rotation (16, 160) qui est coulissante dans le porte-outil (8) ou dans l'élément intermédiaire et qui s'engage par son extrémité ou ses extrémités dans une encoche (180) ménagée dans le cône de montage ou dans un élément (17) fixé à ce cône, cette encoche ou cet élément (17) étant agencés de façon que la tige de verrouillage de rotation (16, 160) ne puisse pas tourner dans la position radiale de verrouillage et puisse, dans la position de travail, tourner par rapport au cône de montage (5) avec le porte-outil (8) ou l'élément intermédiaire.

4. Fraiseuse-aléseuse selon la revendication 3, caractérisée en ce que la tige de verrouillage de rotation (16) possède une extrémité s'étendant dans une bague de verrouillage de rotation (17) dont le diamètre intérieur dans sa partie avant — par rapport à l'outil — est plus grand que le diamètre extérieur de la tige de verrouillage et dont la partie arrière comporte une rainure (18) dont le diamètre et la largeur sont adaptés à la tige de verrouillage (16).

5. Fraiseuse-aléseuse selon l'une des revendications 2 à 4, caractérisée en ce que l'élément ou tige de verrouillage en rotation (16) est pourvu d'un dispositif de commande (21) agencé pour l'introduire axialement dans une encoche (19) du porte-outil (8) ou de l'élément intermédiaire.

6. Fraiseuse-aléseuse selon la revendication 5, caractérisée en ce que ledit dispositif de commande comporte un coulisseau de commande (21) qui l'attaque directement ou indirectement et qui est actionné par le dispositif de blocage (28) prévu sur l'arbre pour bloquer le cône de montage (5).

7. Fraiseuse-aléseuse selon la revendication 6, caractérisée en ce que la tige de rotation (16) est montée dans une broche de guidage (20) qui est précontrainte par un ressort (30) sur une face frontale, tandis que le coulisseau de commande (21) s'appuie contre son autre face frontale et est aussi précontraint par un ressort (23) en direction de cette broche (20).

8. Fraiseuse-aléseuse selon la revendication 7, caractérisée en ce que la course (A, B) pour le blocage du cône de montage (5) par le dispositif de blocage (28) est plus grande que la course (C) d'introduction de la tige de verrouillage de rotation (16) dans l'encoche (19) du porte-outil (8) ou de l'élément intermédiaire.

9. Fraiseuse-aléseuse selon la revendication 8, caractérisée en ce que le ressort (23) sollicitant le coulisseau de commande (21) est détendu dans la position non bloquée du cône de montage, mais est soumis, quand le cône de montage (5) est bloqué, à une force de précontrainte plus grande que celle du ressort (30) sollicitant l'autre bout de la broche de guidage (20).

10. Fraiseuse-aléseuse selon l'une des revendications 6 à 9, caractérisée en ce que le dispositif de blocage (28) du cône de montage (5) est pourvu d'une bague filetée (29) contre laquelle s'appuie l'extrémité arrière du coulisseau de commande ou un élément (25) fixé à celui-ci.

11. Fraiseuse-aléseuse selon l'une des revendications 1 à 3, caractérisée en ce que la tige de rotation (160) est orientée de façon que son axe longitudinal soit au moins approximativement parallèle à l'axe longitudinal du cône de montage (5) et est agencée pour s'engager, pour le verrouillage, dans une encoche (180) ménagée dans la partie avant du cône de montage (5), et en ce que cette tige de verrouillage (160) est extraite de ladite rainure (180) par un dispositif d'arrêt (44) pour la position de travail ou pour la position de blocage dans l'arbre de travail (2).

12. Fraiseuse-aléseuse selon la revendication 11, caractérisée en ce que le dispositif d'arrêt comporte une tige transversale (44) pouvant coulisser radialement dans un alésage (48) ménagé dans l'élément de retenue (35), la tige de verrouillage (160) étant disposée sur cette tige transversale, dont l'extrémité libre coopère avec la partie stationnaire (39) au moyen d'une surface oblique.

13. Fraiseuse-aléseuse selon l'une des revendications 1 à 12, caractérisée en ce que des paliers à rouleaux coniques (14) et un palier amortisseur (15) sont montés entre le cône de montage et le porte-outil (8) ou l'élément intermédiaire.

14. Fraiseuse-aléseuse selon l'une des revendications 1 à 13, caractérisée en ce que l'élément de retenue (35) est agencé pour s'insérer dans une rainure, une encoche, un alésage (38) ou un évidement similaire ménagé dans une partie stationnaire (1) fixée audit corps de support.

## Claims

1. Milling and/or drilling machine for milling, drilling and turning work pieces, having at least one work spindle pivoted in a spindle housing, in which a tool is clamped in a tool carrier, which comprises a tapered socket for the carrier for clamping in the spindle, with a cutting tool being disposed inside the tapered socket via an intermediate part, having a carriage which can be slid along a spindle support, on which a milling head is disposed with the work spindle, and having a fixed and rotatably designed work bench for the work piece to be worked, characterised in that in the tapered sleeve (5) there is disposed a tool holder (8) fixed with respect to the milling head and having a turning tool (7) or there is disposed an intermediate part connected to the tool holder so that the tool holder (8), or the intermediate part, is connected during operation via a support element (35) to a fixed part of the milling or drilling machine, such as, for example, the spindle housing or milling head (1), whereas the tapered sleeve (5) rotates with respect thereto, and in that when the tapered sleeve (5) is not clamped the tool holder (8) or the intermediate part to the tapered sleeve (5) is stopped by a stopping device (16, 17, 18 ot 44, 160, 180 respectively).

2. Milling and/or drilling machine as specified in Claim 1, characterised in that the stopping device comprises a blocking element (16 or 160 respectively), which is disposed between the tool holder (8) or the intermediate part and the tapered sleeve (5) respectively, with it being possible to bring the blocking element into a disengaged position when clamping the tapered sleeve in the work spindle (2) and it being possible to connect the support element (35) to the fixed part (1) of the milling and/or drilling machine.

3. Milling and/or drilling machine according to Claim 2, characterised in that the blocking element comprises an anti-torsion bolt (16 or 160 respectively), which is displaceably disposed in the tool holder (8) or the intermediate part respectively, and which with its end region or end regions projects into a recess (180) in the tapered sleeve or a part (17) connected to the tapered sleeve, with the recess or part (17) being designed so that the anti-torsion bolt (16 or 160 respectively) cannot be turned radially in the locked position and in the operating position it can be rotated together with the tool holder (8) or the intermediate part with respect to the tapered sleeve (5).

4. Milling and/or drilling machine as specified in Claim 3, characterised in that the anti-torsion bolt (16) projects with one end into an anti-torsion ring (17), the internal diameter of which is greater in the front region — with respect to the turning tool — than the external diameter of the anti-torsion bolt and which in its rear region comprises a slot (18), the diameter and width of which is adapted to the anti-torsion bolt (16).

5. Milling and/or drilling machine as specified by one of Claims 2–4, characterised in that the blocking element or the anti-torsion bolt (16) respectively is provided with an adjusting device (21) for its axial displacement in a slot (19) of the tool holder (8) or of the intermediate part respectively.

6. Milling and/or drilling machine as specified in Claim 5, characterised in that the adjusting device comprises a valve spool (21) directly or indirectly acting thereon, which can be operated by the clamping device (28) of the work spindle to clamp the tapered sleeve (5).

7. Milling and/or drilling machine as specified in Claim 6, characterised in that the anti-torsion bolt (16) is disposed in a guide bolt (20), which is prestressed at a front end by a spring (30), whereas the valve spool (21) rests against the other front end, and is also prestressed by a spring (23) in the direction of the guide bolt (20).

8. Milling and/or drilling machine as specified by Claim 7, characterised in that the range (A or B respectively) for clamping the tapered sleeve (5) by the clamping device (28) is greater than the displacement range (C) of the anti-torsion bolt (16) in the slot (19) of the tool holder (8) or intermediate part respectively.

9. Milling and/or drilling machine as specified by Claim 8, characterised in that the spring (23) acting on the valve spool (21) is unstressed when the tapered sleeve (5) is unstressed, but when the tapered sleeve (5) is clamped it has a greater initial stressing force than the spring (30) acting on the other side of the guide bolt (20).

10. Milling and/or drilling machine as specified by one of Claims 6–9, characterised in that the clamping device (28) for the tapered sleeve (5) is provided with a threaded ring (29) against which the rear end of the valve spool or a part (25) connected thereto rests.

11. Milling and/or drilling machine as specified by one of Claims 1–3, characterised in that the anti-torsion bolt (160) extends with its longitudinal axis at least approximately coaxially to the longitudinal axis of the tapered sleeve (5) and can be fitted in a groove (180) disposed in the front region of the tapered sleeve (5) for stopping purposes and in that the anti-torsion bolt (160) can be moved out of the groove (180) by a stopping device (44) for the operating position or for the clamping position in the work spindle (2).

12. Milling and/or drilling machine as specified by Claim 11, characterised in that the stopping device has a cross bolt (44), which can be radially displaced in a bore (48) in the support element (35), with the anti-torsion bolt (160) being disposed at the cross bolt and the free end of the cross bolt cooperating via an inclined plane with the fixed part (39).

13. Milling and/or drilling machine as specified by one of Claims 1–12, characterised in that between the tool holder (8) or the intermediate part and the tapered sleeve there are disposed conical roller bearings (14) and a damping bearing (15).

14. Milling and/or drilling machine as specified by one of Claims 1–13, characterised in that the support element (35) can be inserted into a groove, slot, bore (38) or similar in a fixed part (1) connected to the spindle housing.

Fig.1

EP 0 215 182 B1

Fig. 3

Fig. 2

Fig. 4

EP 0 215 182 B1